# EUROPEAN PATENT SPECIFICATION

(11) **EP 0 619 468 B1**
(45) Date of publication and mention of the grant of the patent: **02.07.1997**
(21) Application number: 94200648.7
(22) Date of filing: 14.03.1994
(51) Int. Cl.: F28D 9/00, F28D 1/03, F28F 9/04, F28D 9/02

(54) **Heat exchanger evaporator**
Wärmetauscher-Verdampfer
Echangeur de chaleur-évaporateur

(30) Priority: 06.04.1993 GB 9307212; 09.11.1993 GB 9323045
(43) Date of publication of application: 12.10.1994
(73) Proprietor: GENERAL MOTORS CORPORATION, Detroit Michigan 48202 (US)
(72) Inventor: Corser, Donald C., L-8034 Strassen (LU); Kadle, Prasad Shripad, East Amherst, New York 14051 (US); Gustafsson, Hans Johan, L-7597 Rechange (LU)
(74) Representative: Denton, Michael John

(56) References cited:
- EP-A- 0 138 435
- EP-A- 0 563 474
- FR-A- 2 148 346

## Description

The present invention relates to an evaporator of a heat exchanger for use, for example in a motor vehicle air-conditioning system.

An example of system containing a refrigerant evaporator of the U-flow type of tube and fin construction is shown in EP-A-0138435.

Typically, such refrigerant evaporators utilise a number of U-shaped tubes which are interconnected at the ends thereof by two adjacent header tubes so as to form a bank of interconnected U-shaped tubes in which refrigerant fluid supplied to one of the header tubes can pass in parallel flow through the U-shaped tubes into the other header tube. Such a bank of U-shaped tubes is substantially rectangular in shape and typically has been housed in a substantially rectangular box-like housing within the motor vehicle air-conditioning system. These U-flow refrigerant evaporators display good refrigerant fluid pressure drop characteristics when in operation.

It is customary in such refrigerant evaporators to sub-divide the two adjacent header tubes into separate multi-pass manifolds which interconnect the ends of the U-shaped tubes so that the refrigerant fluid is caused to flow in several passes, each containing several U-shaped tubes, backwards and forwards across the evaporator from one header tube to the other header tube. In such refrigerant evaporators, it is customary to have an inlet for the refrigerant fluid entering one end of one of the header tubes and an outlet for the refrigerant fluid exiting from the other end of that header tube or the adjacent end of the adjacent header tube, depending on how many passes are provided in the evaporator. Thus, in the customary three-pass U-flow refrigerant evaporator, the inlet for the refrigerant fluid is at one end of one of the header tubes and the outlet is at the other end of the other header tube.

Problems are now arising in the design of modern motor vehicles wherein the quantity of auxiliary equipment being provided in the motor vehicle is conflicting with the space available in the motor vehicle to house such equipment. Consequently, the volume of space available to house air-conditioning systems in many modern motor vehicles is so confined that, in many instances, there is insufficient room for a rectangular-shaped refrigerant evaporator of the type which has a refrigerant fluid inlet positioned at one end of the evaporator and a refrigerant fluid outlet positioned at the other end of the evaporator.

An arrangement has been devised for the customary three-pass U-flow refrigerant evaporator in which both the refrigerant flow inlet and the refrigerant fluid outlet are positioned at the same end of the U-flow refrigerant evaporator. The inlet is positioned in one end of one header tube and the outlet is positioned in the adjacent end of the other header tube. In this arrangement, the inlet is formed by a tube which extends from said one end concentrically through said one header tube to a point approximately two-thirds of the way along that header tube, so that the refrigerant fluid enters that header tube at that point. The remaining third of said one header tube thus forms the first pass of the evaporator, with the refrigerant fluid flowing through the U-tubes of that first pass into the other header tube to return back along the other header tube to a middle section of the U-flow refrigerant evaporator which forms the second pass of the evaporator. In the second pass of the evaporator, the refrigerant fluid flows through the U-tubes of the second pass back into an annular space in said one header tube surrounding the inlet tube, which annular space leads to a third pass of the evaporator. The refrigerant fluid entering the third pass flows through the U-tubes of the third pass to return to the other header tube, and leaves the evaporator via the outlet in said adjacent end of the other header tube.

In this type of three-pass U-flow refrigerant evaporator, the inlet tube passes through an aperture in a solid partition located across the annular space within said one header tube surrounding the inlet tube, and is sealed to it by brazing. In order to provide an adequate leak-tight seal around the inlet tube, the open end of the inlet tube is necked to fit within a collar-shaped area formed around the aperture in the partition, and thus approaches the shape of a venturi nozzle. However, since the inlet tube within said one header tube carries a mixture of liquid and vapour during operation of the evaporator, any variations in pressure drop or expansion within the inlet tube due to passage of the mixture of liquid and vapour through the necked portion of the inlet tube will result in the production of noise, in particular, a hissing noise.

The present invention seeks to provide an improved heat exchanger evaporator.

According to an aspect of the present invention as defined in claim 1, there is provided a multi-pass evaporator of a heat exchanger comprising a plurality of heat exchanger tubes coupled to a first header tube, a blocking member disposed in the first header tube so as to partition the first header tube and an exchanger fluid inlet tube disposed within and spaced from the first header tube, the inlet tube extending from an inlet end of the first header tube to the blocking member and including an open end having a bell-shaped configuration coupled to an aperture in the blocking member.

It has been found that this configuration of end of the inlet tube can significantly reduce noise produced by the evaporator.

Preferably, the blocking member comprises a plurality of tangs deformable onto the open end of the inlet tube so as to secure the inlet tube to the blocking member. In the preferred embodiment, there are provided three tangs substantially equally spaced from one another around the aperture in the blocking member.

Advantageously, the inlet tube is brazed to the tangs.

According to another aspect of the present invention as defined in claim 5, there is provided a method of sealing a bell-shaped end of an inlet tube of a heat-exchanger evaporator to a blocking member provided within a header tube of the evaporator, the blocking member including an aperture therein; the method comprising the steps of providing a plurality of tangs adjacent the aperture at an angle between 80° and 84° to the plane of the blocking member, passing the bell-shaped end of the inlet tube through the aperture and deforming the tangs into clamping contact with the bell-shaped end of the inlet tube until each tang is disposed at an angle between 59° and 61° to the plane of the blocking member.

Preferably, the method includes the step of brazing the contacting surfaces of the tangs to the periphery of the bell-shaped end of the inlet tube.

In a preferred embodiment, there is provided a three-pass U-flow refrigerant evaporator which comprises a number of U-shaped tubes interconnected at the ends thereof by two adjacent header tubes so as to form a bank of interconnected U-shaped tubes in which refrigerant fluid supplied to one of the header tubes can pass in parallel flow through the U-shaped tubes into the other header tube, each of said header tubes being sub-divided by a transverse blocking member to form two separate plenum chambers; an inlet for said refrigerant fluid being positioned in one end of said one header tube and an outlet for said refrigerant fluid being positioned in an adjacent end of said other header tube in fluid communication with a second of said two plenum chambers of said other header tube, said inlet being formed as a tubular member which extends inside said one header tube substantially parallel to the axis of said one header tube, for substantially the length of a first of said plenum chambers of said one header tube, passes through the transverse blocking member in said one header tube, and connects with a second of said plenum chambers of said one header tube, so that refrigerant fluid supplied to said inlet passes along said tubular member, into the second of said plenum chambers of said one header tube, through said U-shaped tubes interconnecting said second of said plenum chambers of said one header tube with a first plenum chamber of said other header tube, along said first plenum chamber of said other header tube in the direction of said transverse blocking member of said other header tube, through said U-shaped tubes interconnecting said first plenum chamber of said other header tube with said first plenum chamber of said one header tube into a space in said first plenum chamber surrounding said tubular member, along said space in said first plenum chamber of said one header tube in the direction of said one end, and through said U-shaped tubes interconnecting said first plenum chamber of said one header tube with said second plenum chamber of said other header tube into said second plenum chamber of said other header tube, to leave the evaporator by said outlet, the periphery of an open end of said tubular member being sealingly connected to the periphery of an aperture within the transverse blocking member in said one header tube, said open end of said tubular member being formed with a bell-shaped expanded configuration immediately adjacent the transverse blocking member in said one header tube.

A preferred method of sealingly connecting the periphery of a bell-shaped open end of a tubular member to the periphery of an aperture within a transverse blocking member in said one header tube of the preferred embodiment includes the steps of forming said aperture within the transverse blocking member with a plurality of integral tangs spaced equidistant from one another around said aperture, each of said tangs extending radially towards the centre of said aperture and being set at an angle in the range of 80° to 84° to the plane of the transverse blocking member so as to extend away from one side of the transverse blocking member; placing the periphery of the bell-shaped open end of the tubular member into contact with the other side of the transverse blocking member so that the bell-shaped open end of the tubular member extends through the aperture and between said integral tangs; applying a deforming force to the integral tags so as to deform each tab inwardly into clamping contact with a respective portion of the periphery of the bell-shaped open end of the tubular member, until each integral tag is set at an angle in the range of 59° to 61° to the plane of the transverse blocking member; and brazing the contacting surfaces of the integral tangs and the periphery of the bell-shaped open end of the tubular member together to produce a fully-sealed connection between the tubular member and the transverse blocking member.

Preferably, each header tube of the three-pass evaporator of the preferred embodiment has a cross-section in the shape of an ellipse which has been partially flattened to produce two opposed sides substantially parallel to the major axis of the ellipse. The tubular member forming the inlet preferably extends through said one header tube with its axis intersecting the major axis of the ellipse adjacent one focus of the ellipse.

In a preferred embodiment of U-flow refrigerant evaporator, the evaporator is formed as an assembly of uniform U-flow flat tubes with air centres therebetween, the ends of the flat tubes being shaped into integral header tanks having opposed, aligned apertures therein. The evaporator is assembled as a stack of said flat tubes having the integral header tanks on the respective ends thereof in sealing contact with one another, with the opposed apertures therein aligned throughout the stack of flat tubes to form two adjacent parallel header tubes.

It has been discovered that, in three-pass U-flow refrigerant evaporators, for example, it is possible to minimise the volume of noise produced during the operation of the evaporator in a motor vehicle air-conditioning system by having the open end of the tubular member formed with the bell-shaped expanded configuration immediately adjacent the transverse blocking member in the integral header tube. Trials have shown that there is an overall decrease in the noise output from the motor vehicle air-conditioning system over a whole range of test frequencies when the evaporator is actually in operation and that there is only a minor increase in the noise output from the motor vehicle air-conditioning system over the whole range of frequencies when the evaporator is switched on.

In a preferred embodiment, the present invention can provide an effective means of obtaining a three-pass U-flow refrigerant evaporator of a motor vehicle air-conditioning system in which the inlet and the outlet to the evaporator are both situated at the same end of the evaporator, and the evaporator, when in operation in a motor vehicle air-conditioning system, emits a minimum of noise, such as a hissing noise. The evaporator can provide a high heat transfer capacity without the creation of a high pressure drop across the evaporator during the operation of the evaporator. Moreover, it is possible to provide a U-flow refrigerant evaporator of a motor vehicle air-conditioning system which is economically and easily manufactured from a number of standard U-flow evaporator plates, already manufactured in bulk for standard U-flow evaporator cores for other air-conditioning purposes.

An embodiment of the present invention is described below, by way of illustration only, with reference to the accompanying drawings, in which:
Figure 1 is a front elevational view of an embodiment of three-pass U-flow refrigerant evaporator;
Figure 2 is a plan view of the three-pass U-flow refrigerant evaporator shown in Figure 1;
Figure 3 is an enlarged cross-sectional view of an upper portion of a U-flow flat tube of the evaporator of Figure 1, taken along line A - A' in Figure 1;
Figure 4 is an enlarged cross-sectional view in plan of the U-flow flat tube of Figure 3, with an end portion of the tubular member omitted; and
Figure 5 is a side view of the U-flow flat tube of Figure 4, taken along line B - B' of Figure 4.

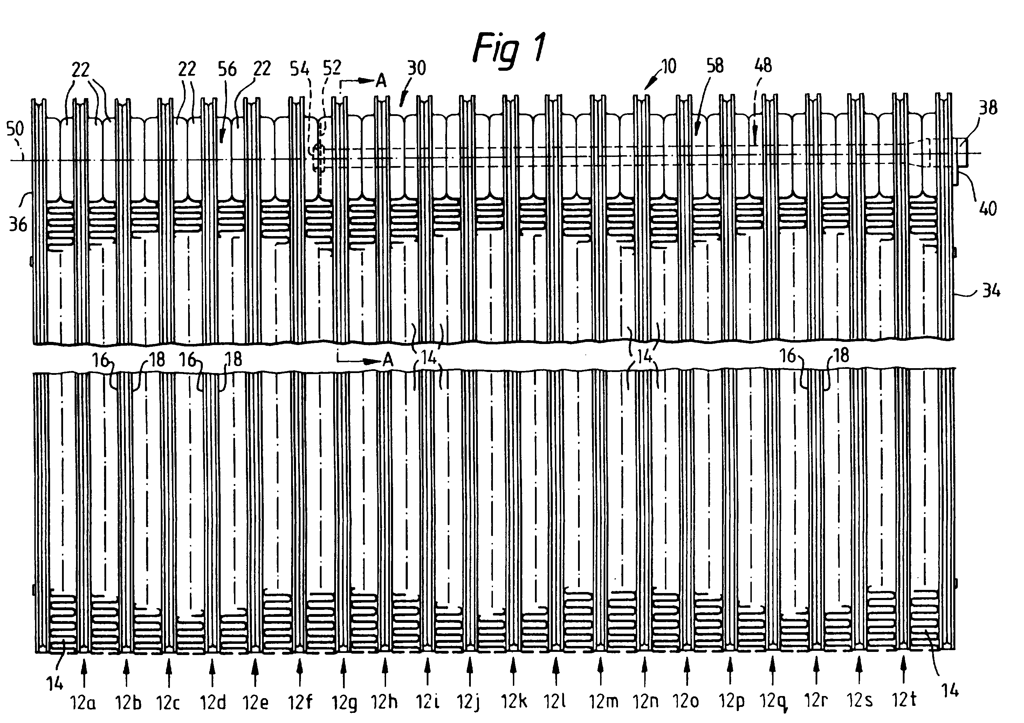

Referring to Figure 1, the embodiment of three-pass U-flow refrigerant evaporator 10 shown comprises an assembly of uniform U-flow flat tubes 12a-12t, with air centres 14 interposed therebetween.

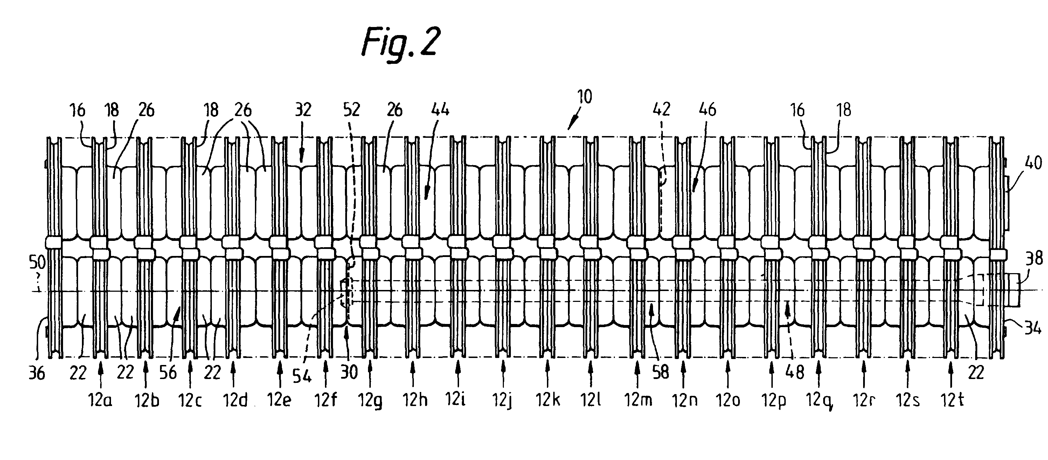

The construction of the U-flow evaporator 10 is shown in more detail in Figure 2, from which it can be seen that each tube 12 is fabricated from a pair of mating core plates exemplified by inner core plate 16 and outer core plate 18. The core plates 16, 18 are made from stampings of thin aluminium sheet or other suitable heat-transfer material, and are generally rectangular in plan view with rounded corners. The upper ends of the plates 16, 18 are each formed with an inlet opening surrounded by a generally conical and truncated apertured protuberance 22, and an outlet opening surrounded by a generally conical and truncated apertured protuberance 26. The generally conical and truncated apertured protuberances 22, 26 are connected to one another, as shown in Figure 2, to form a pair of integral header tubes 30, 32 for flow of refrigerant in either liquid phase or liquid/vapour phase through the flat tubes 12. The U-flow evaporator 10 shown in Figures 1 and 2 is made up of a total of twenty uniform identical tubes 12a to 12t brazed together, a first end plate 34, and a second end plate 36.

The first end plate 34 of the U-flow evaporator 10 has an inlet 38 into the integral header tube 30 at one end of the header tube 30, and an outlet 40 from the integral header tube 32 at an adjacent end of the header tube 32, as shown in Figure 2. Moreover, there is a transverse blocking member 42 located in the integral header tube 32 between flat tubes 12m and 12n, which transverse blocking member 42 seals the adjacent outlet openings in flat tubes 12m and 12n so as to divide the integral header tube 32 into two separate plenum chambers 44, 46, the first plenum chamber 44 being made up of the respective apertured protuberances 26 of the thirteen flat tubes 12a to 12m, and the second plenum chamber 46 being made up of the respective apertured protuberances 26 of the nine flat tubes 12n to 12t, forming a third pass of the U-flow evaporator 10.

The inlet 38 is formed as a tubular member 48 which extends inside the integral header tube 30 substantially parallel to a longitudinal axis 50 of the integral header tube 30, passing through all of the inlet openings of the respective flat tubes 12g to 12t in the process. The tubular member 48 has a diameter less than the diameter of each of the inlet openings in the flat tubes 12g to 12t, so forming an opening in each of the respective inlet openings through which refrigerant fluid can flow from one flat tube to the next flat tube along the integral header tube 30. The tubular member 48 extends through a transverse blocking member 52 located in the integral header tube 30 between flat tubes 12f and 12g, so that refrigerant fluid supplied to said inlet 38 passes along said tubular member 48 and into the truncated apertured protuberances 22 of flat tube 12f. Transverse blocking member 52 seals around the open end 54 of the tubular member 48, and also seals the adjacent inlet openings in flat tubes 12f and 12g, so as to divide the integral header tube 30 into two separate plenum chambers 56, 58, the first plenum chamber 56 being made up of the respective apertured protuberances 22 of the six flat tubes 12a to 12f, forming a first pass of the U-flow evaporator 10, and the second plenum chamber 58 being made up of the respective apertured protuberances 22 of the fourteen flat tubes 12g to 12t. The tubular member 48 is sealingly secured to the transverse blocking member 52 by brazing, so as to prevent any bypass of refrigerant fluid leaving the open end 54 of the tubular member 48 into the inlet opening of flat tube 12g.

As can be appreciated from a study of Figure 2, the first plenum chamber 44 of the integral header tube 32 overlaps the second plenum chamber 58 of the integral header tube 30, with the flat tubes 12g to 12m being common to both the first plenum chamber 44 and the second plenum chamber 58. Consequently, flat tubes 12g to 12m form a second pass of the U-flow evaporator 10.

Refrigerant fluid passing through the open end 54 of the tubular member 48 enters the first plenum chamber 56 of the integral header tube 30, and then passes through the U-shaped flat tubes 12a to 12f interconnecting the first plenum chamber 56 with the first plenum chamber 44 of the integral header tube 32 and into the outlet openings of the integral header tube 32, thus traversing the first pass of the U-flow evaporator 10. The flow of refrigerant in each U-shaped flat tube 12a to 12f occurs through a first flow passage formed in each tube 12a to 12f on one side of a raised divider rib formed on each of the core plates 16, 18 forming each tube 12a to 12f. The divider rib is located in the centre of each tube 12a to 12f to form the first flow passage and a second flow passage which communicates with the integral header tube 32.

The refrigerant fluid then passes along the integral header tube 32 in the direction of the transverse blocking member 42 through the outlet openings in the U-shaped flat tubes 12g to 12m, through the U-shaped flat tubes 12g to 12m interconnecting the first plenum chamber 44 with the integral header tube 30, and into the second plenum chamber 58 of the integral header tube 30, thus traversing the second pass of the U-flow evaporator 10.

In each of the U-shaped flat tubes 12g to 12m flow of refrigerant from the header tube 32 occurs through a first flow passage formed in each tube 12g to 12m on one side of a raised divider rib formed on each of the core plates 16, 18 forming each tube 12g to 12m. The divider rib is located in the centre of each tube 12g to 12m to form the first flow passage and a second flow passage which communicates with the second plenum chamber 58 of the integral header tube 30.

The refrigerant fluid from flat tubes 12g to 12m enters the space surrounding the tubular member 48 in the second plenum chamber 58 of the integral header tube 30, and passes along the second plenum chamber 58 of the integral header tube 30 in the direction of the end plate 34 to enter the space surrounding the tubular member 48 in the respective apertured protuberances 22 of the U-shaped flat tubes 12n to 12t. The refrigerant fluid then passes through the U-shaped flat tubes 12n to 12t interconnecting the second plenum chamber 46 of the integral header tube 32 with the integral header tube 30, and into the second plenum chamber 46 of the integral header tube 32, thus traversing the third pass of the U-flow evaporator 10. The refrigerant fluid finally leaves the U-flow evaporator 10 by the outlet 40 in the first end plate 34.

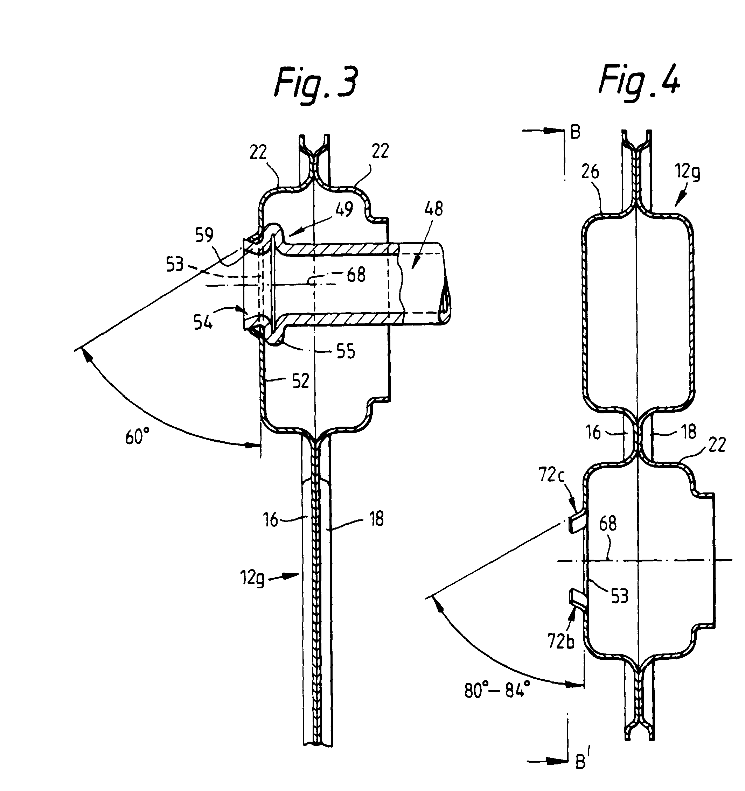

Referring to Figures 3, 4 and 5, an end portion 49 of the tubular member 48 is located off-centre within the apertured protuberances 22 of flat plate 12g which form a portion of the integral header tube 30. The open end 54 of tubular member 48 sealingly abuts the periphery of an aperture 53 in the transverse blocking member 52, which transverse blocking member 52 is formed integrally with the apertured protuberance 22 of the inner core plate 16 of flat plate 12g. The open end 54 of the tubular member 48 is formed with a bell-shaped expanded configuration 55 located immediately adjacent the transverse blocking member 52 and which is in the shape of an expanded bead having a flared opening 59. The forming of the open end 54 of the tubular member 48 with this bell-shaped expanded configuration 55 is achieved with suitable shaping means such as a die-press.

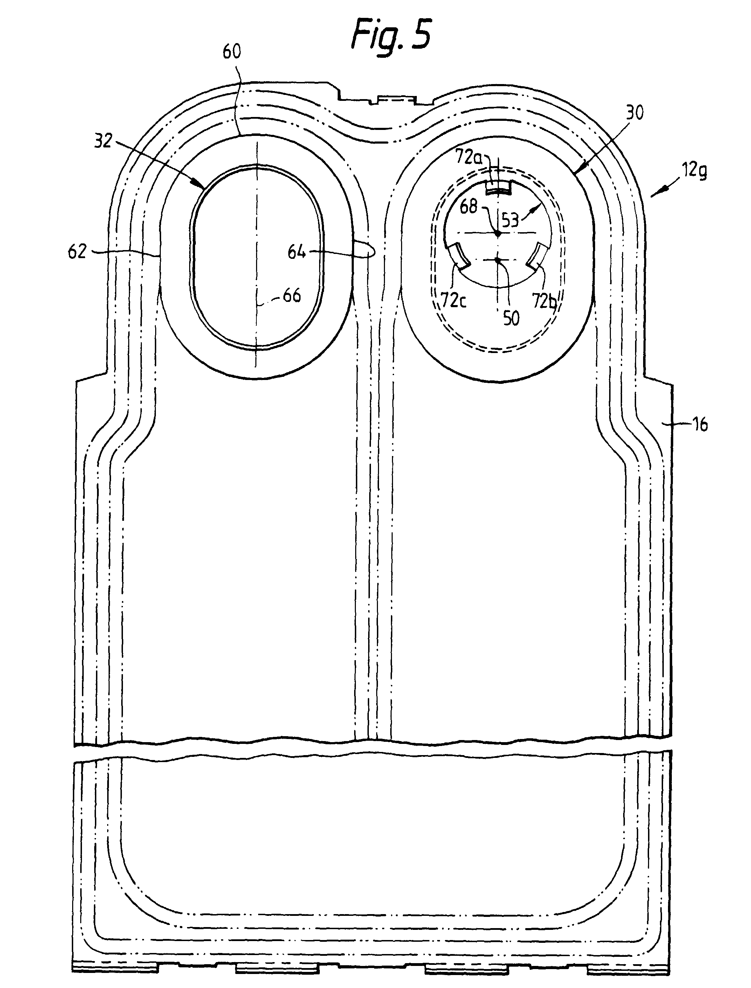

The aperture 53 in the transverse blocking member 52 is formed with three integral tangs 72a, 72b, 72c (see Figures 4 and 5) spaced equidistantly from one another around the aperture 53, each tang 72a, 72b, 72c extending radially towards the centre of the aperture 53 and being set at an angle in the range of 80° to 84° to the plane of the transverse blocking member 52, as can be seen in Figure 4.

A method of sealingly connecting the periphery of the bell-shaped open end 54 of the tubular member 48 to the periphery of the aperture 53 within the transverse blocking member 52 includes the steps of placing the expanded bead 55 of the tubular member 48 into contact with the other side of the transverse blocking member 52 so that the flared opening 59 of the bell-shaped open end 54 extends through the aperture 53 and between the integral tangs 72a, 72b, 72c. A deforming force is then applied to the tangs 72a, 72b, 72c so as to deform each tang inwardly into clamping contact with a respective portion of the periphery of the flared opening 59 of the tubular member 48, until each integral tang is set at an angle in the range of 59° to 61° to the plane of the transverse blocking member 52, as shown in Figure 3. The contacting surfaces of the integral tangs 72a, 72b, 72c and the periphery of the flared opening 59 of the tubular member 48 are then brazed together to produce a fully sealed connection between the tubular member 48 and the transverse blocking member 52.

As can be seen best in Figure 5, each integral header tube 30, 32 of the three-pass evaporator 10 has a cross-section in the shape of an ellipse 60 which has been partially flattened so as to produce two opposed sides 62, 64 which are substantially parallel to the major axis 66 of the ellipse 60. The aperture 53, through which the bell-shaped open end 54 of the tubular member 48 extends, has its axis 68 intersecting the major axis 66 of the ellipse 60 adjacent one focus of the ellipse 60. Thus, as will be appreciated from a study of Figures 3 and 5, the axis of the tubular member 48 is co-axial with the axis 68 of the aperture 53 and intersects the major axis 66 of the ellipse above the longitudinal axis 50 of the integral header tube 30. Consequently, the tubular member 48 is positioned off-centre in the integral header tube 30.

The disclosures in British patent application nos. 9307212.2 and 9323045.6, from which this application claims priority, and in the abstracts accompanying these applications are incorporated herein by reference.

## Claims

1. A multi-pass evaporator of a heat exchanger comprising a plurality of heat exchanger tubes (12) coupled to a first header tube (30), a blocking member (52) disposed in the first header tube so as to partition the first header tube and an exchanger fluid inlet tube (48) disposed within and spaced from the first header tube, the inlet tube extending from an inlet end of the first header tube to the blocking member and including an open end (54) having a bell-shaped configuration (59) coupled to an aperture (53) in the blocking member.

2. A multi-pass evaporator according to claim 1, wherein the blocking member comprises a plurality of tangs (72) deformable onto the open end of the inlet tube so as to secure the inlet tube to the blocking member.

3. A multi-pass evaporator according to claim 2, comprising three tangs (72) substantially equally spaced from one another around the aperture in the blocking member.

4. A multi-pass evaporator according to claim 2 or 3, wherein the inlet tube is brazed to the tangs.

5. A method of sealing a bell-shaped end of an inlet tube of a heat-exchanger evaporator to a blocking member (52) provided within a header tube (30) of the evaporator, the blocking member including an aperture (53) therein; the method comprising the steps of providing a plurality of tangs (72) adjacent the aperture at an angle between 80° and 84° to the plane of the blocking member, passing the bell-shaped end (59) of the inlet tube through the aperture, deforming the tangs into clamping contact with the bell-shaped end of the inlet tube until each tang is disposed at an angle between 59° and 61° to the plane of the blocking member.

6. A method according to claim 5, comprising the step of brazing the contacting surfaces of the tangs to the periphery of the bell-shaped end of the inlet tube.

## Patentansprüche

1. Mehrzug-Verdampfer eines Wärmetauschers mit mehreren Wärmetauscherrohren (12), die mit einem ersten Kopfstückrohr (30) gekoppelt sind, einem in dem ersten Kopfstückrohr angeordneten Blockierteil (52), um das erste Kopfstückrohr zu teilen, und einem Einlaßrohr (48) für das Austauscherfluid, das innerhalb des ersten Kopfstückrohrs angeordnet und von diesem beabstandet ist, wobei sich das Einlaßrohr von einem Einlaßende des ersten Kopfstückrohrs zu dem Blockierteil erstreckt und ein offenes Ende (54) mit einer glockenförmigen Gestaltung (59) einschließt, das mit einer Öffnung (53) in dem Blockierteil gekoppelt ist.

2. Mehrzug-Verdampfer nach Anspruch 1, bei dem das Blokkierteil mehrere Ansätze bzw. Lappen (72) aufweist, die auf das offene Ende des Einlaßrohrs verformbar sind, um das Einlaßrohr an dem Blockierteil zu befestigen.

3. Mehrzug-Verdampfer nach Anspruch 2 mit drei Lappen (72), die um die Öffnung in dem Blockierteil herum im wesentlichen gleich voneinander beabstandet sind.

4. Mehrzug-Verdampfer nach Anspruch 2 oder 3, bei dem das Einlaßrohr an die Lappen gelötet ist.

5. Verfahren zum Abdichten eines glockenförmigen Endes eines Einlaßrohrs eines Wärmetauscher-Verdampfers an einem innerhalb eines Kopfstückrohrs (30) des Verdampfers vorgesehenen Blockierteil (52), wobei das Blockierteil eine Öffnung (53) darin enthält; mit den Schritten Vorsehen mehrerer, der Öffnung unter einem Winkel zwischen 80° und 84° zur Ebene des Blockierteils benachbarter Lappen (72), Durchführen des glockenförmigen Endes (59) des Einlaßrohrs durch die Öffnung, Verformen der Lappen in einen Klemmkontakt mit dem glockenförmigen Ende des Einlaßrohrs, bis jeder Lappen unter einem Winkel zwischen 59° und 61° zur Ebene des Blockierteils angeordnet ist.

6. Verfahren nach Anspruch 5 mit dem Schritt Löten der Kontaktflächen der Lappen an den Umfang des glockenförmigen Endes des Einlaßrohrs.

## Revendications

1. Evaporateur à passer multiples d'échangeur de chaleur comprenant une pluralité de tubes (12) échangeurs de chaleur couplés à un premier tube (30) de tête, un élément (52) d'obstruction placé dans le premier tube de tête afin de séparer le premier tube de tête et un tube (48) d'entrée de fluide échangeur de chaleur placé à l'intérieur et espacé du premier tube de tête, le tube d'entrée s'étendant depuis une extrémité d'entrée du premier tube de tête jusqu'à l'élément d'obstruction et présentant une extrémité ouverte (54) qui possède une configuration (59) en forme de cloche, couplée à une ouverture (53) formée dans l'élément d'obstruction.

2. Evaporateur à passages multiples selon la revendication 1, dans lequel l'élément d'obstruction comprend une pluralité de pattes (72) déformables placées sur l'extrémité ouverte du tube d'entrée afin de fixer le tube d'entrée à l'élément d'obstruction.

3. Evaporateur à passages multiples selon la revendication 2, comprenant trois pattes (72) placées sensiblement à une distance égale les unes des autres autour de l'ouverture formée dans l'élément d'obstruction.

4. Evaporateur à passages multiples selon la revendication 2 ou 3, dans lequel le tube d'entrée est fixé aux pattes par brasage.

5. Procédé pour fixer de manière étanche une extrémité en forme de cloche d'un tube d'entrée d'un évaporateur d'échangeur de chaleur à un élément d'obstruction (52) placé à l'intérieur d'un tube (30) de tête de l'évaporateur, l'élément d'obstruction comprenant une ouverture (53); le procédé comprenant les étapes consistant à placer une pluralité de pattes (72) de manière adjacente à l'ouverture sous un angle compris entre 80° et 84° par rapport au plan de l'élément d'obstruction, faire passer l'extrémité (59) en forme de cloche du tube d'entrée à travers l'ouverture,. déformer les pattes pour les mettre en position de contact de serrage avec l'extrémité en forme de cloche du tube d'entrée jusqu'à ce que chaque patte soit disposée sous un angle compris entre 59° et 61° par rapport au plan de l'élément d'obstruction.

6. Procédé selon la revendication 5, comprenant l'étape consistant à réunir par brasage les surfaces de contact des pattes à la périphérie de l'extrémité en forme de cloche du tube d'entrée.
